# EUROPÄISCHE PATENTANMELDUNG

(11) **EP 1 306 010 A1**
(43) Veröffentlichungstag der Anmeldung: **02.05.2003**
(21) Anmeldenummer: 02021026.6
(22) Anmeldetag: 20.09.2002
(51) Int. Cl.: A22C 11/02, B02C 18/30

(54) **Kombinierbare Füll-und Zerkleinerungsmaschinen für Fleisch oder fleischähnliche Produkte**

(30) Priorität: 26.10.2001 DE 10152323
(71) Anmelder: Convenience Food Systems Wallau GmbH & Co.KG, 35216 Biedenkopf Wallau (DE)
(72) Erfinder: Eggenstein, Norbert, 48317 Drensteinfurt (DE); Vomhof, Paul, 57334 Bad Laasphe (DE)
(74) Vertreter: Wolff, Felix, Dr.

(57) **Zusammenfassung**

Die vorliegende Erfindung betrifft eine Vorrichtung aufweisend eine Füllmaschine und eine Zerkleinerungsvorrichtung für Fleisch oder fleischähnliche Produkte, wobei die Füllmaschine und die Zerkleinerungsvorrichtung zwei getrennt funktionierende Einheiten sind, die lösbar miteinander verbindbar sind, und die Zerkleinerungsvorrichtung am Ausgang der Füllmaschine angeordnet ist.

## Beschreibung

Die vorliegende Erfindung betrifft eine Vorrichtung aufweisend eine Füllmaschine und eine Zerkleinerungsvorrichtung für Fleisch oder fleischähnliche Produkte, wobei die Füllmaschine und die Zerkleinerungsvorrichtung zwei getrennt funktionierende Einheiten sind, die lösbar miteinander verbindbar sind, und die Zerkleinerungsvorrichtung am Ausgang der Füllmaschine angeordnet ist.

Aus dem Stand der Technik sind Füll- und Zerkleinerungsmaschinen bekannt, die jedoch nicht miteinander kompatibel sind.

Es stellt sich deshalb die Aufgabe, eine Vorrichtung zur Verfügung zu stellen, die die Nachteile des Standes der Technik nicht aufweist.

Gelöst wird die Aufgabe erfindungsgemäß durch eine Vorrichtung aufweisend eine Füllmaschine und eine Zerkleinerungsvorrichtung für Fleisch oder fleischähnliche Produkte, bei der die Füllmaschine und die Zerkleinerungsmaschine zwei getrennt funktionierende Einheiten sind, die lösbar miteinander verbindbar sind und die Zerkleinerungsvorrichtung an dem Ausgang der Füllmaschine angeordnet ist.

Die erfindungsgemäße Vorrichtung hat den Vorteil, daß Füllmaschinen und Zerkleinerungsvorrichtungen je nach Bedarf einander zugeordnet werden können. In der Regel reicht es aus, wenn ein Betrieb über mehrere Füllmaschinen, jedoch nur eine Zerkleinerungsmaschine verfügt und die Zerkleinerungsmaschine je nach Bedarf den jeweiligen Füllmaschinen zuordnet. Weist beispielsweise die Zerkleinerungsvorrichtung eine Fehlfunktion auf, so kann die Füllmaschine unabhängig von dieser weiter betrieben werden. Dasselbe gilt für eine Fehlfunktion bei einer Füllmaschine. Des weiteren hat die erfindungsgemäße Vorrichtung den Vorteil, daß beispielsweise ein schon evakuiertes Produkt in die Zerkleinerungsvorrichtung gelangt. Durch eine Abkopplung der Zerkleinerungsvorrichtung von der Füllmaschine ist es beispielsweise auch möglich, Fleisch oder fleischähnliche Produkte abzufüllen, ohne sie zusätzlich zu zerkleinern.

Andererseits können Fleisch oder fleischähnliche Produkte mehrfach zerkleinert werden, bevor sie abgefüllt werden.

Vorzugsweise wird bei der erfindungsgemäßen Vorrichtung die Fördermenge oder der Förderdruck der Füllmaschine geregelt.

In einer anderen bevorzugten Ausführungsform der erfindungsgemäßen Vorrichtung wird an die Füllmaschine ein vorzugsweise regelbares Vakuum angelegt, so daß das Fleisch oder die fleischähnlichen Produkte vorzugsweise evakuiert an die Zerkleinerungsvorrichtung übergeben werden.

Vorzugsweise weist die Zerkleinerungsvorrichtung eine Antriebsleistung < 60 KW auf.

Vorteilhafterweise weisen sowohl die Füllmaschine als auch die Zerkleinerungsvorrichtung jeweils ein unabhängig voneinander funktionierendes Mittel zur Vermeidung eines Trockenlaufes auf. Dadurch wird erreicht, daß weder die Füllmaschine noch die Zerkleinerungsvorrichtung im Betrieb Schaden nehmen kann.

Ein weiterer Gegenstand der vorliegenden Erfindung ist ein Verfahren zur Herstellung von Feinbrät mit der erfindungsgemäßen Vorrichtung, bei dem das Rohmaterial mit der Füllmaschine in die Zerkleinerungsvorrichtung gefördert und dort zerkleinert wird.

Dieses Verfahren hat den Vorteil, daß die Füllmaschine nicht nur zum Befüllen von Wurstdärmen eingesetzt wird, sondern auch als Fördervorrichtung für die Zerkleinerungsvorrichtung. Dadurch gelingt eine zusätzliche Einsparung von Maschinen bzw. ein vermehrter und flexibler Einsatz der Zerkleinerungsvorrichtung. Des weiteren kann eine Zerkleinerungsvorrichtung eingesetzt werden, die keine Fördervorrichtung aufweist. Vorzugsweise wird das Feinbrät nach dem Zerkleinern gesammelt, die Füllmaschine und die Zerkleinerungsvorrichtung voneinander getrennt und das gesammelte Feinbrät in die Füllmaschine eingefüllt und mit der Füllmaschine beispielsweise in Wurstdärme abgefüllt. Vorzugsweise wird an der Füllmaschine bei jedem Verfahrensschritt Vakuum angelegt.

Ebenfalls bevorzugt wird das Rohmaterial mit einem konstanten Volumenstrom in die Zerkleinerungsvorrichtung gefördert. In einer vorteilhaften Ausführungsform des vorliegenden Verfahrens wird das Rohmaterial mit einem konstanten Druck in die Zerkleinerungsvorrichtung gefördert.

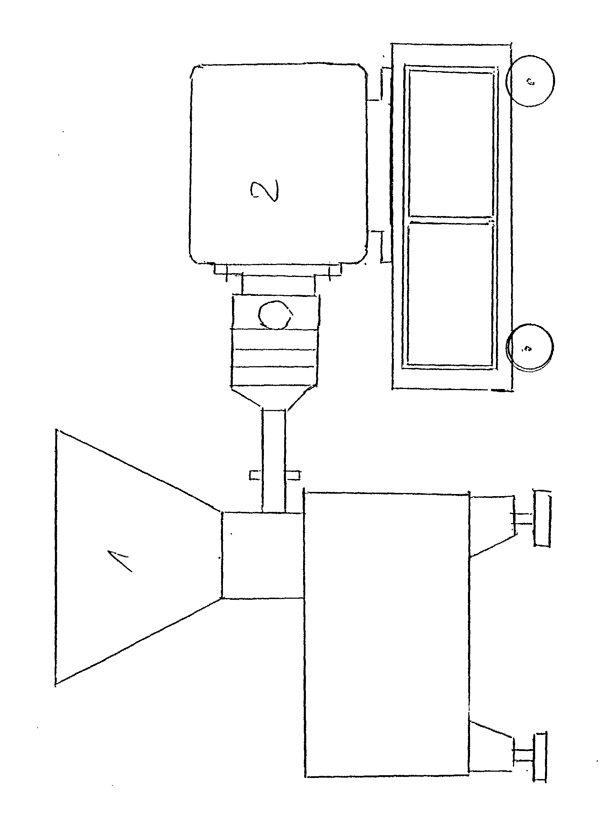

Im folgenden wird die erfindungsgemäße Vorrichtung bzw. das erfindungsgemäße Verfahren anhand von Figur 1 erläutert. Diese Erläuterungen sind lediglich beispielhaft und schränken den allgemeinen Erfindungsgedanken nicht ein.

**Figur 1** zeigt eine Füllmaschine 1 und eine Zerkleinerungsvorrichtung 2, die über den Flunch 3 miteinander lösbar verbunden sind. Je nach Bedarf wird die Zerkleinerungsvorrichtung entweder an die Füllmaschine angeschlossen oder von dieser abgekoppelt.

## Patentansprüche

1. Vorrichtung aufweisend eine Füllmaschine (1) und eine Zerkleinerungsvorrichtung (2) für Fleisch oder fleischähnliche Produkte, **dadurch gekennzeichnet, daß** die Füllmaschine (1) und die Zerkleinerungsvorrichtung (2) zwei getrennt funktionierende Einheiten sind, die lösbar miteinander verbindbar sind und die Zerkleinerungsvorrichtung (2) am Ausgang (3) der Füllmaschine (1) angeordnet ist.

2. Vorrichtung nach Anspruch 1, **dadurch gekennzeichnet, daß** die Fördermenge oder der Förderdruck der Füllmaschine geregelt wird.

3. Vorrichtung nach einem der Ansprüche 1 oder 2, **dadurch gekennzeichnet, daß** in der Füllmaschine ein vorzugsweise regelbares Vakuum anliegt und daß das Fleisch oder die fleischähnlichen Produkte vorzugsweise evakuiert an die Zerkleinerungsvorrichtung übergeben werden.

4. Vorrichtung nach einem der Patentansprüche 1-3, **dadurch gekennzeichnet, daß** die Zerkleinerungsvorrichtung eine Antriebsleistung kleiner 60 kW aufweist.

5. Vorrichtung nach einem der Ansprüche 1-4, **dadurch gekennzeichnet, daß** die Füllmaschine und die Zerkleinerungsvorrichtung jeweils ein unabhängig voneinander funktionierendes Mittel zur Vermeidung eines Trockenlaufs aufweisen.

6. Verfahren zur Herstellung von Feinbrät, mit einer Vorrichtung gemäß einem der Patentansprüche 1-5, **dadurch gekennzeichnet, daß** das Rohmaterial mit der Füllmaschine (1) in die Zerkleinerungsvorrichtung (2) gefördert und dort zerkleinert wird.

7. Verfahren nach Anspruch 6 , **dadurch gekennzeichnet, daß**
- das Feinbrät nach dem Zerkleinern gesammelt,
- die Füllmaschine (1) und die Zerkleinerungsvorrichtung (2) voneinander getrennt werden,
- das gesammelte Feinbrät in die Füllmaschine eingefüllt und
- mit der Füllmaschine abgefüllt wird.

8. Verfahren nach Anspruch 7, **dadurch gekennzeichnet, daß** an der Füllmaschine bei jedem Verfahrensschritt Vakuum angelegt wird.

9. Verfahren nach einem der Ansprüche 7 oder 8, **dadurch gekennzeichnet, daß** das Rohmaterial mit einem konstanten Volumenstrom in die Zerkleinerungsvorrichtung gefördert wird.

10. Verfahren nach einem der Ansprüche 7 oder 8, **dadurch gekennzeichnet, daß** Rohmaterial mit einem konstanten Druck in die Zerkleinerungsvorrichtung gefördert wird.
